# EUROPEAN PATENT SPECIFICATION

(11) **EP 1 392 448 B1**
(45) Date of publication and mention of the grant of the patent: **21.09.2011**
(21) Application number: 02739303.2
(22) Date of filing: 16.05.2002
(51) Int. Cl.: B05B 5/00, B05B 15/02, F16C 19/00, C11D 3/50

(54) **SOLVENT RESISTANT BEARINGS FOR SELF-GENERATING ELECTROSTATIC SPRAY GUN**
LÖSUNGSMITTELBESTÄNDIGE LAGER FÜR ELEKTROSTATISCHE SPRITZPISTOLE MIT EIGENER ENERGIEVERSORGUNG
PALIERS RESISTANT AUX SOLVANTS POUR PISTOLET DE PULVERISATION ELECTROSTATIQUE SPONTANEE

(30) Priority: 16.05.2001 US 291269 P
(43) Date of publication of application: 03.03.2004
(73) Proprietor: Graco Minnesota Inc., Minneapolis, MN 55413 (US)
(72) Inventor: LUNZER, Lawrence, St. Louis Park, MN 55416 (US)
(74) Representative: Santarelli
(86) International application number: PCT/US2002/015925
(87) International publication number: WO 2002/092239

(56) References cited:
- DE-A1- 2 261 789
- DE-C1- 19 857 757
- GB-A- 540 865
- US-A- 4 069 974
- US-A- 4 290 091
- US-A- 4 771 946
- US-A- 5 939 363

## Description

### TECHNICAL FIELD

Electrostatic spray guns are well known for use in applying paints and other coatings where high transfer efficiency is preferred.

### BACKGROUND ART

Electrostatic spray guns having self-contained power supplies such as shown in US Patent nos. 4,554,622,4,462,061,4,290,091,4,377,838 and 4,491,276 are well known. Such applicators have an air-powered turbine which drives an alternator which in turn supplies a voltage multiplier to provide the charging voltage.

In such products, the bearings are used to hold and allow a magnet to rotate on its shaft. As a bearing, a bearing of which the outer side facing away from the sliding layer of the carrier element is provided with a layer consisting of PFA (perfluoro-alkoxy polymer) is known as disclosed in DE19857757. In normal operation, air is passed over an internal impeller causing the magnet to rotate and such rotation inside a coil of wire provides electrical power for the applicator.

This air is then exhausted through a separated air passage to the outside of the applicator.

Such placement of the bearings inside the applicator allows the passage of air over and around the bearings to remove slight amounts of lubricant from the bearings. Because of this lubricant, this exhaust air must be separated from the air that is used to atomize the paint in order to prevent contamination with the bearing lubricant.

During cleaning of the applicator with solvents, such liquid solvents can flow into the bearings through the air passages, causing the solvents to remove the lubricant from the bearings subsequently leading to bearing failure. Also, if the air cap was not properly tightened, paint can flow backwards in the applicator filling the alternator air passages and the bearings with paint thereby forcing the alternator to be removed and replaced.

### DISCLOSURE OF THE INVENTION

It is the purpose of this invention to remove the aforementioned causes of failure and extend bearing life.

Such bearings are made by pressing a bronze powdered metal into the bearing shape and then machining the pressing to its final dimensions. This process produces a porous metal shape which can hold liquid similar to a sponge. The bearing is then placed in oil and a vacuum is drawn removing the air and replacing it with oil. The excess oil is then wiped off and the porous bearing material will retain the lubricating oil which acts as a lubricant for the shaft as it rotates inside the bearings inner diameter. Such self-lubricating bearings described above constitute a well-known prior art bearing often referred to as an OILITE bearing.

In the instant invention, the bearing surfaces are coated with a thin solvent resistant coating such as XYLAN fluoropolymer based coating material (in the preferred embodiment), an epoxy-based paint or a baked-on powder coating or other equivalent. The bearing is completely coated except for the inner diameter through which the shaft turns. The coating is cured properly and the bearings are then placed into the container of lubricating oil and a vacuum is drawn removing the air, thus filling the porous bearings through the exposed inner diameter.

This result provides a minimum of exposed area (the inner diameter) thereby minimizing the removal of lubrication oil and the entering of contaminates. This process provides an increased bearing life and a greater ability to survive if the bearing should come in contact with solvent or paint contamination. This also allows the customer to reuse the current bearing when and if it comes in contact with paint or solvents by simply cleaning up the coated area. If needed, the customer can add a small amount of additional oil to the inner diameter before reuse. Such bearing coating can prevent the air from blowing out small amounts of lubricant imbedded in the bearing as it passes over it. This eliminates the need for an additional exhaust opening in the applicator and allows the air used to power the alternator to be used for paint atomization. This can thus result in a savings in air consumption and simply construction of internal air passages resulting in a smaller and lighter product.

These and other objects and advantages of the invention will appear more fully from the following description made in conjunction with the accompanying drawings wherein like reference characters refer to the same or similar parts throughout the several views.

### BRIEF DESCRIPTION OF DRAWINGS

Figure 1 is an exploded view of an electrostatic spray gun utilized in the instant invention.
Figure 2 is a cross section of the alternator assembly utilized in the instant invention.
Figure 3 is a front view of the bearing utilized in the instant invention.

### BEST MODE FOR CARRYING OUT THE INVENTION

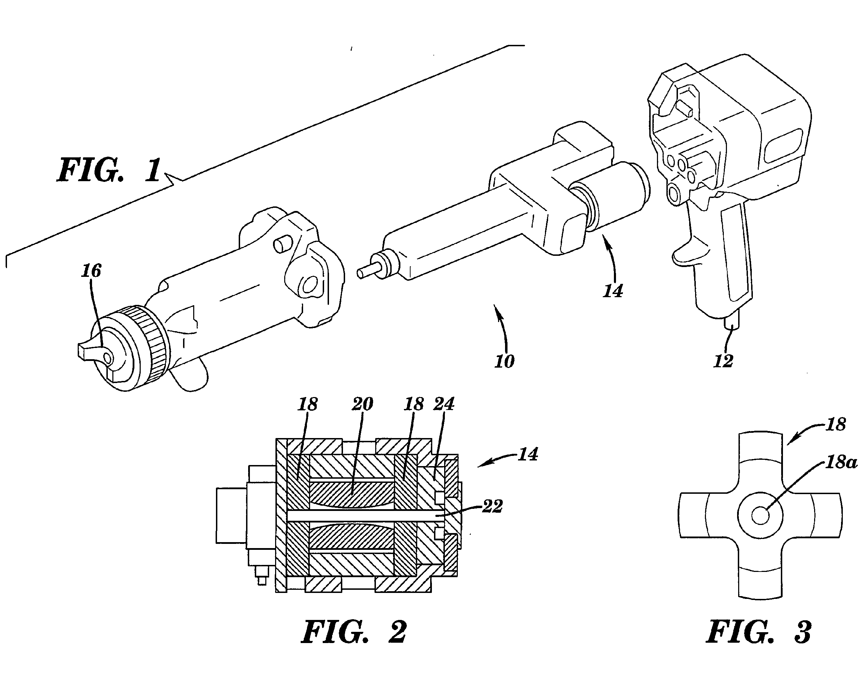

In the instant invention shown broadly in Figure 1, an electrostatic gun, generally designated 10 has an inlet air passage 12, an alternator turbine assembly 14 and an air cap 16. Alternator assembly 14 is shown in more detail in Figure 2, and is comprised of bearings 18, magnet 20 mounted on shaft 22, and impeller 24 mounted on shaft 22. Bearings 18 are shown in detail in Figure 3 and are coated with XYLAN fluoropolymer based coating material (in the preferred embodiment), an epoxy-based paint or baked on powder coating except for the inner diameter 18A which is left uncoated.

After a curing of the coating, the bearings are placed in a container of lubricating oil and a vacuum drawn, thereby removing the air from the porous bearings and allowing the oil to penetrate the bearing for later use.

It is contemplated that various changes and modifications may be made to the bearing assembly without departing from scope of the invention as defined by the following claims.

## Claims

1. An electrostatic spray gun (10) having a self-contained power supply, wherein said power supply comprises an alternator turbine set (14), said turbine having an air-driven impeller (24) mounted in at least one bearing (18) exposed to an air stream, said bearing (18) comprising an internal diameter (18A), **characterized in that** said bearing is coated with a solvent resistant coating and **in that** said coating completely covers said bearing except for said internal diameter (18A).

2. The electrostatic spray gun of claim 1 wherein said coating comprises a fluoropolymer based material.

3. The electrostatic spray gun of claim 1 wherein said bearing (18) is comprised of a porous bronze material.

4. The electrostatic spray gun of claim 3 wherein said bearing (18) comprises a lubricant therein.

## Patentansprüche

1. Elektrostatische Spritzpistole (10) mit eigener Energieversorgung, wobei die Energieversorgung eine Generator-Turbinen-Anordnung (14) aufweist, wobei die Turbine ein in wenigstens einem Lager (18) angeordnetes luftangetriebenes Flügelrad (24) umfasst, das einem Luftstrom ausgesetzt ist, wobei das Lager (18) einen Innendurchmesserbereich (18A) aufweist,
**dadurch gekennzeichnet,**
**dass** das Lager mit einer lösungsmittelbeständigen Beschichtung beschichtet ist und dass die Beschichtung das Lager vollständig mit Ausnahme des Innendurchmesserbereichs (18A) bedeckt.

2. Elektrostatische Spritzpistole nach Anspruch 1, wobei die Beschichtung ein fluorpolymeres Material umfasst.

3. Elektrostatische Spritzpistole nach Anspruch 1, wobei das Lager (18) ein poröses Bronzematerial umfasst.

4. Elektrostatische Spritzpistole nach Anspruch 3, wobei das Lager (18) ein Schmiermittel darin enthält.

## Revendications

1. Pistolet de pulvérisation électrostatique (10) ayant un bloc d'alimentation indépendant, dans lequel ledit bloc d'alimentation comprend un ensemble turbine-alternateur (14), ladite turbine ayant une roue entraînée par l'air (24) montée sur au moins un palier (18) exposé à un flux d'air, ledit palier (18) comprenant un diamètre interne (18A), **caractérisé en ce que** ledit palier est revêtu d'un revêtement résistant aux solvants et **en ce que** ledit revêtement couvre complètement ledit palier excepté pour ledit diamètre interne (18A).

2. Pistolet de pulvérisation électrostatique de la revendication 1, dans lequel ledit revêtement comprend un matériau à base de polymère fluoré.

3. Pistolet de pulvérisation électrostatique de la revendication 1, dans lequel ledit palier (18) est composé d'un matériau de bronze poreux.

4. Pistolet de pulvérisation électrostatique de la revendication 3, dans lequel ledit palier (18) comprend un lubrifiant à l'intérieur.
